# EUROPEAN PATENT APPLICATION

(11) **EP 0 879 850 A2**
(43) Date of publication of application: **25.11.1998**
(21) Application number: 98116420.5
(22) Date of filing: 06.02.1996
(51) Int. Cl.: C08L 23/10, C23C 14/20, B32B 15/08

(54) **Olefin polymer composition, process for the preparation thereof, and film and metallized film comprising olefin polymer composition**

(30) Priority: 10.02.1995 JP 46137/95; 09.08.1995 JP 225819/95; 23.01.1996 JP 29879/96
(62) Divisional of application: 96101670.6
(71) Applicant: Chisso Corporation, Osaka-shi Osaka-fu (JP)
(72) Inventor: Ohtani, Kazuya, Ichihara-shi, Chiba (JP); Morimoto, Yoshitaka, Ichihara-shi, Chiba (JP); Hirose, Taketo, Ichihara-shi, Chiba (JP)
(74) Representative: HOFFMANN - EITLE

(57) **Abstract**

An olefin polymer composition is described, which comprises from 80 to 98% by weight of a crystalline propylene polymer and from 2 to 20% by weight of an amorphous ethylene/α-olefin copolymer having a melt flow rate of from 15 to 70 g/10 min (230°C, 21.18 N). An olefin polymer composition is also described, which comprises from 2 to 20% by weight of an amorphous ethylene/α-olefin copolymer composition comprising from 95 to 99.9% by weight of an amorphous ethylene/α-olefin copolymer and from 0.1 to 5% by weight of an oxidation inhibitor and from 80 to 98% by weight of a crystalline propylene polymer. Furthermore, a film obtained from the composition, a metallized film obtained by metallizing the film, and the preparation process thereof are also described.

## Description

### FIELD OF THE INVENTION

The present invention relates to an olefin polymer composition, an olefin polymer film and a metallized olefin polymer film. More particularly, the present invention relates to an olefin polymer composition comprising a crystalline propylene polymer and an amorphous ethylene/α-olefin copolymer which exhibits an excellent film-making properties, an olefin polymer film excellent in external appearance (few fish eyes), and a metallized film excellent in external appearance, metallization strength and gas barrier properties.

The present invention further relates to a process for preparing the olefin polymer composition.

### BACKGROUND OF THE INVENTION

In recent years, a film comprising a composition having an amorphous α-olefin copolymer incorporated in a crystalline propylene polymer, and a metallized film obtained by metallizing the film in vacuo have been used. There have been known, e.g., a metallized polyolefin film comprising a polyolefin film composed of from 60 to 99% by weight of a polypropylene resin (A) and from 1 to 40% by weight of a polyolefin random copolymer (B) (the sum of the weight of the components (A) and (B) is 100% by weight), in which the polyolefin random copolymer (B) is a random copolymer composition comprising (I) from 20 to 95 parts by weight of an ethylene random copolymer composed of an ethylene and a C₃₋₂₀ α-olefin having an ethylene content of from 60 to 95 mol-% and MFR (230°C) of from 0.1 to 50 g/10 min and (II) from 5 to 80 parts by weight of a propylene random copolymer composed of a propylene and an ethylene or a C₄₋₂₀ α-olefin having a propylene content of from 60 to 95 mol-% and MFR (230°C) of from 0.1 to 50 g/10 min (the sum of the weight of the components (I) and (II) is 100 parts by weight) (JP-A-5-50556 (The term "JP-A" as used herein means an "unexamined published Japanese patent application")); a metallized plastic film obtained by metallizing a base film comprising a composition containing from 2 to 20 parts by weight of an amorphous ethylene/propylene/diene copolymer incorporated in 100 parts by weight of a polypropylene resin (JP-A-6-287747); and a metallized plastic film obtained by metallizing a base film comprising a composition containing from 2 to 20 parts by weight of an amorphous ethylene/propylene copolymer incorporated in 100 parts by weight of a polypropylene resin (JP-A-6-287746).

However, a film obtained by processing a composition comprising a polyolefin random copolymer having an MFR (230°C) of from 0.5 to 6.7 g/10 min incorporated in a polyolefin resin through an extruder and a T-die as described in JP-A-5-50556 is liable to fish eye (fish eye occurring before retention) and thus leaves something to be desired in external appearance. In particular, a film obtained by a process which comprises continuous film-making, suspending the operation of the extruder for several hours, and then resuming film-making shows many fish eyes (fish eye occurring after retention) and thus leaves something to be desired in external appearance.

Similarly, a film obtained by processing a composition comprising an amorphous ethylene/propylene/diene copolymer or amorphous ethylene/propylene copolymer having a Mooney viscosity of from 10 to 98 ML₁₊₄(100°C) incorporated in a polyolefin resin through an extruder and a T-die as described in examples of JP-A-6-287746 and JP-A-6-287747 is liable to fish eye (fish eye occurring before retention) and thus leaves something to be desired in external appearance. (The above described Mooney viscosity of from 10 to 98 ML₁₊₄(100°C) corresponds to from 0.5 to 8 g/10 min as calculated in terms of melt flow rate (230°C, 21.18 N).) In particular, a film obtained by a process which comprises continuous film-making, suspending the operation of the extruder for several hours, and then resuming film-making shows many fish eyes (fish eye occurring after retention) and thus leaves something to be desired in external appearance. Of course, metallised films obtained by metallizing the above described films having a problem of external appearance also leaves something to be desired in external appearance.

Further, JP-A-5-50556, JP-A-6-287746, and JP-A-6-287747 have no idea and Example directed to the inhibition of external defects, particularly fish eye occurring before and after retention.

Once a fish eye has occurred before or after retention, a problem of external appearance arises. Further, a film obtained, thereafter, by processing other compositions through the same extruder and T-die is also liable to fish eye. In order to inhibit the fish eye, the extruder and T-die must be washed with a large amount of a resin or must be disassembled and cleaned. This requires much time and labor, presenting a problem of extremely being uneconomic.

Therefore, techniques described in JP-A-5-50556, JP-A-6-287746 and JP-A-6-287747 leave something to be desired in external appearance, particularly in the elimination of fish eye occurring before and after retention.

### SUMMARY OF THE INVENTION

An object of the present invention is to provide an olefin polymer composition, an olefin polymer film and a metallized film.

Another object of the present invention is to provide an olefin polymer composition a crystalline propylene polymer and an amorphous ethylene/α-olefin copolymer which exhibits an excellent film-making properties, an olefin polymer film excellent in external appearance (few fish eyes), and a metallized film excellent in external appearance, metallization strength and gas barrier properties.

A further object of the present invention is to provide a process for preparing the olefin polymer composition.

The inventors made extensive studies. As a result, it was found that the foregoing objects of the present invention can be accomplished with an olefin polymer composition comprising a crystalline propylene polymer and an amorphous ethylene/α-olefin copolymer, wherein the melt flow rate of the amorphous ethylene/α-olefin copolymer is adjusted to a predetermined range. The inventors also found that the foregoing objects of the present invention can be similarly accomplished by adding an oxidation inhibitor to the amorphous ethylene/α-olefin copolymer alone prior to mixing with the crystalline propylene polymer. The present invention has been worked out on the basis of this knowledge.

Embodiments of the present invention will be given below.
(1) An olefin polymer composition (C) which comprises:
   from 80 to 98% by weight of a crystalline propylene polymer (A); and
   from 2 to 20% by weight of an amorphous ethylene/α-olefin copolymer (B) having a melt flow rate of from 15 to 70 g/10 min (230°C, 21.18 N). (The sum of the percentages of the components (A) and (B) is 100% by weight.)
(2) An olefin polymer composition (E) which comprises:
   from 90 to 99% by weight of an olefin polymer composition (C) comprising from 80 to 98% by weight of a crystalline propylene polymer (A) and from 2 to 20% by weight of an amorphous ethylene/α-olefin copolymer (B) having a melt flow rate of from 15 to 70 g/10 min (230°C, 21.18 N); and
   from 1 to 10% by weight of a crystalline ethylene polymer (D). (The sum of the percentages of the components (C) and (D) is 100% by weight.)
(3) A film (F₁) which comprises an olefin polymer composition (C) comprising:
   from 80 to 98% by weight of a crystalline propylene polymer (A); and
   from 2 to 20% by weight of an amorphous ethylene/α-olefin copolymer (B) having a melt flow rate of from 15 to 70 g/10 min (230°C, 21.18 N).
(4) A film (F₂) which comprises an olefin polymer composition (E) comprising:
   from 90 to 99% by weight of an olefin polymer composition (C) comprising from 80 to 98% by weight of a crystalline propylene polymer (A) and from 2 to 20% by weight of an amorphous ethylene/α-olefin copolymer (B) having a melt flow rate of from 15 to 70 g/10 min (230°C, 21.18 N); and
   from 1 to 10% by weight of a crystalline ethylene polymer (D).
(5) A metallized film (G₁) prepared by metallizing a film (F₁) which comprises an olefin polymer composition (C) comprising:
   from 80 to 98% by weight of a crystalline propylene polymer (A); and
   from 2 to 20% by weight of an amorphous ethylene/α-olefin copolymer (B) having a melt flow rate of from 15 to 70 g/10 min (230°C, 21.18 N).
(6) A metallized film (G₂) prepared by metallizing a film (F₂) which comprises an olefin polymer composition (E) comprising:
   from 90 to 99% by weight of an olefin polymer composition (C) comprising from 80 to 98% by weight of a crystalline propylene polymer (A) and from 2 to 20% by weight of an amorphous ethylene/α-olefin copolymer (B) having a melt flow rate of from 15 to 70 g/10 min (230°C, 21.18 N); and
   from 1 to 10% by weight of a crystalline ethylene polymer (D).
(7) An olefin polymer composition (C') which comprises:
   from 2 to 20% by weight of an amorphous ethylene/α-olefin copolymer composition (B'') comprising from 95 to 99.9% by weight of an amorphous ethylene/α-olefin copolymer (B') and from 0.1 to 5% by weight of an oxidation inhibitor; and
   from 80 to 98% by weight of a crystalline propylene polymer (A'). (The sum of the percentages of the component (B') and the oxidation inhibitor and the sum of the percentages of the components (B'') and (A') are both 100% by weight.)
(8) An olefin polymer composition (E') which comprises:
   from 2 to 20% by weight of an amorphous ethylene/α-olefin copolymer composition (B'') comprising from 95 to 99.9% by weight of an amorphous ethylene/α-olefin copolymer (B') and from 0.1 to 5% by weight of an oxidation inhibitor;
   from 79.5 to 97.99% by weight of a crystalline propylene (A'); and
   from 0.01 to 0.5% by weight of a hydrotalcite or a salt of a lithium-aluminum composite hydroxide (D'). (The sum of the percentages of the component (B') and the oxidation inhibitor and the sum of the percentages of the components (B''), (A') and (D') are both 100% by weight.)
(9) An olefin polymer film (F₁') which comprises an olefin polymer composition (C') comprising:
   from 2 to 20% by weight of an amorphous ethylene/α-olefin copolymer composition (B'') comprising from 95 to 99.9% by weight of an amorphous ethylene/α-olefin copolymer (B') and from 0.1 to 5% by weight of an oxidation inhibitor; and
   from 80 to 98% by weight of a crystalline propylene polymer (A').
(10) An olefin polymer film (F₂') which comprises an olefin polymer composition (E') comprising:
   from 2 to 20% by weight of an amorphous ethylene/α-olefin copolymer composition (B'') comprising from 95 to 99.9% by weight of an amorphous ethylene/α-olefin copolymer (B') and from 0.1 to 5% by weight of an oxidation inhibitor;
   from 79.5 to 97.99% by weight of a crystalline propylene (A'); and
   from 0.01 to 0.5% by weight of a hydrotalcite or a salt of a lithium-aluminum composite hydroxide (D').
(11) A metallized film (G₁') prepared by metallizing the olefin polymer film (F₁') which comprises an olefin polymer composition (C') comprising:
   from 2 to 20% by weight of an amorphous ethylene/α-olefin copolymer composition (B'') comprising from 95 to 99.9% by weight of an amorphous ethylene/α-olefin copolymer (B') and from 0.1 to 5% by weight of an oxidation inhibitor; and
   from 80 to 98% by weight of a crystalline propylene polymer (A').
(12) A metallized film (G₂') prepared by metallizing the olefin polymer film (F₂') which comprises an olefin polymer composition (E') comprising:
   from 2 to 20% by weight of an amorphous ethylene/α-olefin copolymer composition (B'') comprising from 95 to 99.9% by weight of an amorphous ethylene/α-olefin copolymer (B') and from 0.1 to 5% by weight of an oxidation inhibitor;
   from 79.5 to 97.99% by weight of a crystalline propylene (A'); and
   from 0.01 to 0.5% by weight of a hydrotalcite or a salt of a lithium-aluminum composite hydroxide (D').
(13) A process for preparing an olefin polymer composition (C') which comprises:
   mixing from 95 to 99.9% by weight of an amorphous ethylene/α-olefin (B') and from 0.1 to 5% by weight of an oxidation inhibitor to prepare an amorphous ethylene/α-olefin copolymer composition (B''); and
   mixing from 2 to 20% by weight of said amorphous ethylene/α-olefin copolymer composition (B'') and from 80 to 98% by weight of a crystalline propylene polymer (A').
(14) A process for preparing an olefin polymer composition (E') which comprises:
   mixing from 95 to 99.9% by weight of an amorphous ethylene/α-olefin (B') and from 0.1 to 5% by weight of an oxidation inhibitor to prepare an amorphous ethylene/α-olefin copolymer composition (B''); and
   mixing from 2 to 20% by weight of said amorphous ethylene/α-olefin copolymer composition (B''), from 79.5 to 97.99% by weight of a crystalline propylene polymer (A') and from 0.01 to 0.5% by weight of a hydrotalcite or a salt of a lithium-aluminum composite hydroxide (D').

### DETAILED DESCRIPTION OF THE INVENTION

The present invention is described in detail below.

The crystalline propylene polymer (A) for use in the present invention is a crystalline propylene homopolymer or a crystalline propylene/α-olefin copolymer.

The crystalline propylene homopolymer preferably has a melt flow rate as determined in accordance with condition 14 set forth in Table 1 (i.e., testing temperature: 230°C, testing load: 21.18 N) of JIS K7210 (hereinafter occasionally abbreviated as MFR (230°C, 21.18 N)) of from 2 to 20 g/10 min, more preferably from 5 to 15 g/10 min, particularly preferably from 5 to 10 g/10 min, a density of from 0.89 to 0.91 g/cm³, and a crystalline melting point of from 160 to 165°C. The term "crystalline melting point" used herein means a temperature at which the endothermic curve of a material due to crystalline melting shows the highest peak thereof. In the present invention, a crystalline melting point is determined from an endothermic curve that is observed with a Differential scanning calorimeter by heating a 10 mg of specimen at a heating rate of 20°C/min in a stream of nitrogen. If two or more endothermic peaks are observed, the crystalline melting point is determined from the peak having the largest peak area.

The crystalline propylene/α-olefin copolymer preferably has an MFR (230°C, 21.18 N) of from 2 to 20 g/10 min, more preferably from 5 to 15 g/10 min, particularly preferably from 5 to 10 g/10 min, a density of from 0.89 to 0.90 g/cm³, and a crystalline melting point of from 120 to 160°C, more preferably from 130 to 150°C, particularly preferably from 130 to 140°C. Examples of the α-olefin include ethylene and 1-butene.

The crystalline propylene homopolymer can be prepared by homopolymerizing propylene.

The propylene/α-olefin copolymer can be prepared by the random copolymerization of a propylene as a main component with an α-olefin. Of course, the propylene/α-olefin copolymer may be an ethylene/propylene/1-butene copolymer obtained by the copolymerization of propylene, ethylene and 1-butene.

Examples of the homopolymerization and the copolymerization include known slurry polymerization and gas phase polymerisation in the presence of a catalyst comprising a coordination compound catalyst and an organic metal compound cocatalyst such as organic aluminum compound in combination. Examples of the coordination compound catalyst include a catalyst comprising an organic metal compound and a transition metal compound. Examples of the organic metal compound include triethylaluminium, and examples of the transition metal compound include titanium tetrachloride.

Details of the homopolymerization or copolymerization of the crystalline propylene polymer (A) are described, for example, in JP-A-60-7645 (U.S. Patent 4,304,890), JP-A-56-811, JP-A-63-26460 (U.S. Patents 4,330,694 and 4,401,589), JP-A-56-11908 (U.S. Patent 4,742,139), JP-A-2-84404, JP-A-2-229807 (U.S. Patents 4,990,470 and 5,438,110), JP-A-55-151009, JP-A-58-138720, JP-A-58-138721 and JP-A-58-215408.

The amorphous ethylene/α-olefin copolymer (B) for use in the present invention is an amorphous ethylene/α-olefin copolymer having an MFR (230°C, 21.18 N) of from 15 to 70 g/10 min., preferably from 20 to 70 g/10 min., more preferably from 30 to 70 g/10 min., particularly from 55 to 70 g/10 min. A film comprising an olefin polymer composition using an amorphous ethylene/α-olefin copolymer having an MFR (230°C, 21.18 N) of far less than 15 g/10 min is inferior in external appearance and thus is not suitable for the present invention.

The ethylene content of the amorphous ethylene/α-olefin copolymer is preferably from 40 to 95% by weight, more preferably from 60 to 95% by weight. Furthermore, the ethylene content of from 70 to 90% by weight is particularly preferred for achieving excellent peeling strength on the metallized surface (metallizing strength) of metallized film comprising the olefin polymer composition of the present invention.

Examples of the process for preparing the amorphous ethylene/α-olefin copolymer (B) include a process which comprises the copolymerization of ethylene as a main component with an α-olefin such as propylene, 1-butene and diene. Examples of the copolymerization include a known slurry polymerization or gas phase polymerization in the presence of a vanadium catalyst or a titanium catalyst.

Details of the polymerization are described, for example, in JP-A-56-59813, JP-A-56-59814, JP-A-56-59815, JP-A-56-151710 (U.S. Patent 4,366,297), JP-A-56-53113, JP-A-56-59816, JP-A-56-112917 and JP-A-56-155210 (U.S. Patent 4,377,671).

The olefin polymer composition (C) of the present invention is an olefin polymer composition comprising from 80 to 98% by weight of a crystalline propylene polymer (A) and from 2 to 20% by weight of an amorphous ethylene/α-olefin copolymer (B) having an MFR (230°C, 21.18 N) of from 15 to 70 g/10 min. An olefin polymer composition having an amorphous ethylene/α-olefin copolymer content of far less than 2% by weight provides a metallized film having a poor metallizing strength. On the contrary, an olefin polymer composition having an amorphous ethylene/α-olefin copolymer content of far greater than 20% by weight exhibits poor film-making properties and thus is not suitable for the present invention.

In the present invention, an olefin polymer composition (E) comprising from 90 to 99% by weight of an olefin polymer composition (C) and from 1 to 10% by weight of a crystalline ethylene polymer (D) may be used for improving the film-making properties. Preferably, the composition (E) comprises from 95 to 99% by weight of the composition (C) and from 1 to 5% by weight of the polymer (D). Further preferably, the composition (E) comprises from 97 to 99% by weight of the composition (C) and from 1 to 3% by weight of the polymer (D). (The sum of the percentages of the components (C) and (D) is 100% by weight.)

The crystalline ethylene polymer (D) for use in the present invention is a crystalline ethylene homopolymer or a crystalline ethylene/α-olefin copolymer, which are generally known as "polyethylene" (e.g., low density polyethylene, high density polyethylene, linear low density polyethylene and very low density polyethylene).

The density of the crystalline ethylene copolymer (D) is preferably from 0.925 to 0.965 g/cm³, more preferably from 0.930 to 0.965 g/cm³. The MFR as determined in accordance with condition 4 set forth in Table 1 (i.e., testing temperature: 190°C, testing load: 21.18 N) of JIS K7210 (hereinafter occasionally abbreviated as MFR (190°C, 21.18 N)) of the crystalline ethylene copolymer (D) is preferably from 1 to 20 g/10 min.

Examples of the process for preparing the crystalline ethylene copolymer include a process which comprises a polymerization of ethylene with the use of a radical polymerization initiator such as oxygen or an organic peroxide at a high temperature of from 200 to 300°C under a high pressure of from 400 to 500 atm, a process which comprises a polymerization of ethylene with the use of a metal oxide catalyst under a medium pressure of from 30 to 40 atm, and a process which comprises a homopolymerization of ethylene or a random copolymerization of ethylene as a main component with at least one α-olefin such as 1-butene and 1-hexene with the use of a Ziegler catalyst under a low pressure of several atm.

Examples of the process for preparing the olefin polymer composition (C) and olefin polymer composition (E) of the present invention include a process which comprises the use of a mixer equipped with a high speed agitator such as Henschel mixer (trade name) or an ordinary blender such as ribbon blender and tumbling mixer. If melt kneading is required, a process which comprises the use of an ordinary single screw extruder or twin-screw extruder with a cylinder temperature being set to from 200 to 280°C to effect pelletization may be exemplified.

The olefin polymer composition (C) and olefin polymer composition (E) for use in the present invention may contain an oxidation inhibitor, an inorganic filler, a lubricant, a blocking inhibitor, etc. incorporated therein, as needed, within an amount range such that the objects of the present invention cannot be impaired.

As the oxidation inhibitor there may be preferably used a phosphoric or phenolic oxidation inhibitor having a molecular weight of not less than 500. Specific examples of such an oxidation inhibitor include tetrakis[methylene-3-(3',5',-di-t-butyl-4'-hydroxyphenyl)propionate]methane, 1,3,5-trimethyl-2,4,6-tris(3,5-di-t-butyl-4-hydroxybenzyl)benzene, 1,3,5-tris(4-t-butyl-3-hydroxy-2,6-dimethylbenzyl)isocyanurate, 6-[4-hydroxy-3,5-di-t-butylamino)-2,4-bis-n-octylthio-1,3,5-triazine, 1,1,3-tris(2-methyl-4-hydroxy-5-t-butylphenyl)butane, tris(3,5-di-t-butyl-4-hydroxyphenyl) isocyanurate, and tetrakis(2,4-di-t-butylphenyl)4,4'-biphenylene-diphosphonite. These oxidation inhibitors may be used alone or in combination of two or more thereof. The addition amount of such an oxidation inhibitor is generally from 0.03 to 0.3 parts by weight per 100 parts by weight of the olefin polymer composition. The addition of such an oxidation inhibitor is extremely effective for the stabilization of the composition during film making and in use of the film.

Examples of the inorganic filler include calcium carbonate, silica, clay, talc, hydrotalcite, and zeolite.

The amorphous ethylene/α-olefin copolymer (B') for use in the present invention is an amorphous ethylene/α-olefin copolymer, preferably an amorphous ethylene/propylene copolymer, obtained by the copolymerization of ethylene with at least one of propylene, 1-butene or α-olefin having not less than 4 carbon atoms. The ethylene content of the ethylene/α-olefin copolymer is preferably from 50 to 90% by weight, more preferably from 70 to 90% by weight for achieving excellent metallizing strength of the metallized film thus obtained. The MFR (230°C, 21.18 N) of the ethylene/α-olefin copolymer is preferably from 15 to 70 g/10 min, more preferably from 20 to 70 g/10 min, further preferably from 30 to 70 g/10 min, particularly preferably from 55 to 70 g/10 min for achieving good compatibility with crystalline propylene polymer and excellent external appearance of the resulting film (fish eye occurring before and after retention).

Examples of the process for preparing the amorphous ethylene/α-olefin copolymer (B') include a process which comprises the copolymerization of ethylene as a main component with an α-olefin such as propylene, 1-butene and diene. Examples of the copolymerization include a known slurry polymerization or gas phase polymerization in the presence of a vanadium catalyst or a titanium catalyst.

Details of the copolymerization are described, for example, in JP-A-56-59813, JP-A-56-59814, JP-A-56-59815, JP-A-56-151710 (U.S. Patent 4,366,297), JP-A-56-53113, JP-A-56-59816, JP-A-56-112917 and JP-A-56-155210 (U.S. Patent 4,377,671).

The amorphous ethylene/α-olefin copolymer composition (B'') for use in the present invention is an amorphous ethylene/α-olefin copolymer composition comprising from 95 to 99.9% by weight, preferably from 97 to 99.9% by weight, more preferably from 99 to 99.9 of an amorphous ethylene/α-olefin copolymer (B') and from 0.1 to 5% by weight, preferably 0.1 to 3% by weight, more preferably 0.1 to 1% by weight of an oxidation inhibitor. (The sum of the percentages of the component (B') and the oxidation inhibitor is 100% by weight.)

As the oxidation inhibitor added to the amorphous ethylene/α-olefin copolymer (B') of the present invention there may be preferably used an oxidation inhibitor having a molecular weight of not less than 500, more preferably a phosphoric or phenolic oxidation inhibitor. Examples of the phosphoric oxidation inhibitor include tris(2,4-di-t-butylphenyl)phosphite, tetrakis(2,4-di-t-butylphenyl)4,4'-biphenylene-diphosphonite, tetrakis(2,4-di-butyl-5-methylphenyl)4,4'-biphenylene-diphosphonite and tris[2,2'-bis(4,6-di-t-butylphenyl)]-triethanolamine-triphosphite. Examples of the phenolic oxidation inhibitor include tetrakis[methylene-3-(3,5-di-t-butyl-4-hydroxyphenyl)-propionate]methane and 1,3,5-trimethyl-2,4,6-tris(3,5-di-t-butyl-4-hydroxybenzyl)benzene.

Examples of the process for preparing the amorphous ethylene/α-olefin copolymer composition (B'') for use in the present invention include:
a process which comprises preparing an amorphous ethylene/α-olefin copolymer (B') by a known solution polymerization process, adding an oxidation inhibitor to a mixed solution of the amorphous ethylene-α-olefin copolymer (B') and a solution used in the above described polymerization while they are in a mixed solution state, stirring the mixture, and then separating the amorphous ethylene-α-olefin copolymer (B') from the solution used in the polymerization to prepare an amorphous ethylene-α-olefin copolymer (B'');
a process which comprises blending an amorphous ethylene/α-olefin copolymer (B') in the form of powder, paste or pellet with an oxidation inhibitor by means of a known mixer to prepare an amorphous ethylene-α-olefin copolymer (B''); and
a process which comprises blending an amorphous ethylene/α-olefin copolymer (B') in the form of powder, paste or pellet with an oxidation inhibitor by means of a known mixer, and then melt-kneading the mixture by means of a known extruder to prepare an amorphous ethylene/α-olefin copolymer (B'').

The crystalline propylene polymer (A') for use in the present invention is a crystalline propylene homopolymer, a crystalline propylene/α-olefin copolymer obtained by the copolymerization of a propylene as a main component with ethylene or an α-olefin having not less than 4 carbon atoms or a composition comprising two or more of the above described copolymers each having a different composition. As the crystalline propylene/α-olefin copolymer there may be preferably used a crystalline ethylene/propylene copolymer having an ethylene content of from 2 to 10% by weight and a crystalline melting point of from 115 to 150°C or crystalline ethylene/propylene/1-butene copolymer having an ethylene content of from 2 to 8% by weight, a 1-butene content of from 0.5 to 6% by weight and a crystalline melting point of from 115 to 150°C from the standpoint of adhesion with a metal, impact resistance and heat-sealing properties of the resulting film comprising the olefin polymer compositions (C') or (E') of the present invention.

The hydrotalcite for use in the present invention include a known hydrotalcite, and a hydrotalcite represented by the following chemical formula is preferred from the standpoint of neutralizing effect:

Mg_{4.5}Al₂(OH)₁₃CO₃·3.5H₂O

The purpose of the addition of the hydrotalcite is to decrease the amount of active chlorine compounds in the olefin polymer composition obtained, to thereby inhibit the deterioration of screws in the extruder for use in film making.

The salt of a lithium-aluminum composite hydroxide for use in the present invention is preferably a compound salt represented by the following chemical formula from the stand point of neutralizing effect:

[Al₂Li(OH)₅]ₙX·mH₂O

wherein X represents an inorganic or organic anion; n represents the valence of the anion X; and m represents a number of not more than 3.

The purpose of the addition of the salt of a lithium-aluminum composite hydroxide is to decrease the amount of active chlorine compounds in the olefin polymer composition obtained, to thereby inhibit the deterioration of screws in the extruder for use in film making, similarly to the hydrotalcite group.

As the process for the preparation of the olefin polymer composition (C') of the present invention there may be exemplified a process which comprises blending the amorphous ethylene/α-olefin copolymer composition (B'') and the crystalline propylene polymer (A') by means of a mixer equipped with a high speed agitator such as Henschel mixer (trade name) or an ordinary blender such as ribbon blender and tumbling mixer (dry blend). If melt kneading is required, a process which comprises the use of an ordinary single screw extruder or twin-screw extruder with a cylinder temperature being set to from 200 to 280°C to effect pelletization may be exemplified.

As the process for the preparation of the olefin polymer composition (E') of the present invention there may be exemplified a process which comprises blending the amorphous ethylene/α-olefin copolymer composition (B''), the crystalline propylene polymer (A'), a hydrotalcite and a salt of a lithium-aluminum hydroxide by means of a mixer equipped with a high speed agitator such as Henschel mixer (trade name) or an ordinary blender such as ribbon blender and tumbling mixer (dry blend). If melt kneading is required, a process which comprises the use of an ordinary single screw extruder or twin-screw extruder with a cylinder temperature being set to from 200 to 280°C to effect pelletization may be exemplified.

The olefin polymer compositions (C') and (E') of the present invention may contain an inorganic filler, a lubricant, a blocking inhibitor and a polyethylene incorporated therein within an amount range such that the objects of the present invention cannot be impaired.

Examples of the inorganic filler and blocking inhibitor include calcium carbonate, silica, clay, talc, zeolite, aluminum silicate, and magnesium silicate. Any of these substances may be used.

As the polyethylene there may be preferably used a high density polyethylene or straight-chain low density polyethylene from the standpoint of film-making properties.

A composition obtained by blending the amorphous ethylene/α-olefin copolymer (B'), the crystalline propylene polymer (A') and the oxidation inhibitor, or a composition obtained by blending the crystalline propylene copolymer (A') with the oxidation inhibitor and the amorphous ethylene/α-olefin copolymer (B') by means of a mixer equipped with a high speed agitator or ordinary blender, or a composition obtained by pelletizing such a composition through an ordinary single screw extruder or twin-screw extruder is not excellent in the external appearance (fish eye occurring before and after retention) of the film obtained therefrom, the external appearance (fish eye occurring before and after retention) of metallized film obtained by metallizing the film and gas barrier properties and thus is not suitable for the present invention.

The film of the present invention may be an unoriented film or a monoaxially or biaxially oriented film. The preparation of such a film can be accomplished by an ordinary T-die method or inflation method. Details of the preparation of the film for use in the present invention are described, for example, in JP-A-48-37470. In the present invention, besides the foregoing single layer film, a laminated film obtained by laminating a plurality of films as a surface layer on one or both sides of the foregoing single layer film may be exemplified.

Examples of the metallized film of the present invention include a metallized film obtained by metallizing the above described single layer film or multi-layer film with a metal such as aluminum, gold, silver, copper, nickel, chromium, germanium, selenium, titanium, tin, zinc or the like. Among these metals, aluminum is generally used. The thickness of the metal layer is generally from 50 to 800 Å, preferably from 100 to 700 Å, particularly preferably from 300 to 600 Å. The film may be metallized on the entire surface of either one side or both side thereof, or may be matallized partially. The metal layer may be colored or provided with a top coat for protection.

In the preparation of the metallized film, a film obtained from the foregoing composition may be subjected to metallization directly or after having been subjected to surface treatment for enhancing the wettability of the film to enhance the adhesion thereof, e.g., corona discharge treatment in air or an atmosphere of special gas such as nitrogen and oxygen and flame treatment. As a known common vacuum metallizing process for metallizing a plastic film of continuous length (generally in a rolled form) there may be exemplified a process which comprises the continuous metallization of the film which has been just fed with vaporised molecules of a desired metal such as aluminum produced by melting and evaporating the metal in a vessel or in the form of filament under reduced pressure of not more than 10⁻⁴ Torr, followed by winding, in a vacuum metallizing apparatus equipped with a rolled film feeding section, a metallizing section and a winding section. The process using such a vacuum metallizing apparatus is a batch process. As a method for enhancing the productivity there may be exemplified a process which comprises the use of a film in the form of a wide and continuous roll having, for example, a width of not less than 2 m and a length of from 10,000 to 20,000 m.

Besides the foregoing vacuum metallizing process, there are various metallizing processes. For example, a sputtering process utilizing a phenomenon in which a metal constituting a cathode flies when discharge occurs in vacuo or ion plating process may be exemplified. In the present invention, metallizing processes described, for example, in JP-A-4-280617 and JP-A-4-151240 can also be used.

The present invention will be further described in the following examples and comparative examples, but the present invention should not be construed as being limited thereto.

The methods for measuring physical properties and criteria of the evaluation in Examples 1 to 13 (corresponding to any of embodiments (1) to (6) of the present invention) and Comparative Examples 1 to 11 are as follows:

### (1) Fish eye occurring before retention (unit: /500 cm²)

The compositions obtained in Examples 1 to 13 and comparative Examples 1 to 11 described below were each extruded through an extruder having a bore diameter of 65 mm and a T-die at a melting temperature of 250°C, and then rapidly cooled in an air chamber and over a quenching roll having a surface temperature of 30°C to obtain films having a thickness of 30 µm. The films thus obtained were then visually determined for the number of fish eyes having a size of not less than 50 µm per 500 cm². The evaluation of fish eye was conducted in accordance with the following criteria as the number of fish eyes occurring before retention. The evaluation results E, V, G and N have the following meaning:
E: 24 fish eyes or less/500 cm²
V: 25 to 30 fish eyes/500 cm²
G: 31 to 49 fish eyes/500 cm²
N: 50 fish eyes or more/500 cm²

In the above E to G, no problems arise in practical use.

### (2) Fish eye occurring after retention (unit: /500 cm²)

After the measurement of the number of fish eyes occurring before retention, the operation of the extruder and T-die used was suspended. When the temperature in the extruder reached not higher than 50°C, the extruder and T-die were again heated to a temperature of 250°C. After 2 hours later, the composition was processed in the same manner as above to obtain a film. The film obtained 10 minutes after the restart of film making was then visually determined for the number of fish eyes having a size of not less than 50 µm per 500 cm². The evaluation of fish eye was conducted in accordance with the following criteria as the number of fish eyes occurring after retention. The evaluation results E, V, G and N have the following meaning:
E: 24 fish eyes or less/500 cm²
V: 25 to 30 fish eyes/500 cm²
G: 31 to 49 fish eyes/500 cm²
N: 50 fish eyes or more/500 cm²

In the above E to G, no problems arise in practical use.

### (3) Peel strength on metallized surface (Metallizing Strength, unit: g/15 mm)

A film metallized with a metal (aluminum) on one side thereof and a biaxially oriented polypropylene film having an average thickness of 20 µm were laminated with an adhesive for dry laminate in such an arrangement that the metallized surface of the former film was brought into contact with the latter film. The above described biaxially oriented polypropylene film was prepared by extruding a crystalline propylene homopolymer having an MFR (230°C, 21.10 N) of 6 g/10 min and a crystalline melting point of 163°C through an extruder and a T-die to obtain a film having a thickness of about 750 µm, and then stretching the film in, simultaneously, both machine and transverse directions at 5 times using a pantagraph type stretching apparatus in a heat chamber heated to 140°C with an infrared heater. The laminated film thus obtained was then aged at a temperature of 40°C for 2 days. After the adhesive was thoroughly dried, the peel strength at an angle of 90 degrees on the interface was measured by a tensile tester to give an indication of peel strength on metallized surface.

### (4) Film-making properties

The compositions obtained in Examples 1 to 13 and Comparative Examples 1 to 11 described below were each extruded through an extruder having a bore diameter of 65 mm and a T-die at a melting temperature of 220°C, and then rapidly cooled in an air chamber and over a quenching roll having a surface temperature of 30°C to obtain a film. The film thus obtained was immediately wound on a roll while being subjected to corona discharge treatment on one side thereof such that the wetting index thereof reached 40 dyn/cm. The film being wound was visually observed and evaluated in accordance with the following criteria to give an indication of film-making properties. The evaluation results E, G and N have the following meaning.
E: Neither wrinkles nor uneven windings were observed.
G: Some wrinkles observed but no practical problems arise.
N: Wrinkles and uneven windings occurred continuously, and the film was hardly put into practical use.

In the above E and G, no problems arise in practical use.

The polymers used in Examples 1 to 13 and Comparative Examples 1 to 11 is described below.
PP-1: Crystalline ethylene/propylene/1-butene copolymer having an ethylene content of 3.1% by weight, a 1-butene content of 1.1% by weight, an MFR (230°C, 21.18 N) of 7 g/10 min and a crystalline melting point of 137°C
PP-2: Crystalline ethylene/propylene copolymer having an ethylene content of 0.3% by weight, an MFR (230°C, 21.18 N) of 7 g/10 min and a crystalline melting point of 158°C
PP-3: Crystalline propylene polymer having an MFR (230°C, 21.18 N) of 10 g/10 min and a crystalline melting point of 162°C
PP-4: Crystalline ethylene/propylene copolymer having an ethylene content of 2.5% by weight, an MFR (230°C, 21.18 N) of 6.5 g/10 min and a crystalline melting point of 147°C
EPR-1: Amorphous ethylene/propylene copolymer having a propylene content of 20% by weight and an MFR (230°C, 21.18 N) of 40 g/10 min
EPR-2: Amorphous ethylene/propylene copolymer having a propylene content of 20% by weight and an MFR (230°C, 21.18 N) of 20 g/10 min
EPR-3: Amorphous ethylene/propylene copolymer having a propylene content of 20% by weight and an MFR (230°C, 21.18 N) of 60 g/10 min
EPR-4: Amorphous ethylene/propylene copolymer having a propylene content of 20% by weight and an MFR (230°C, 21.18 N) of 5 g/10 min
EPR-5: Amorphous ethylene/propylene copolymer having a propylene content of 30% by weight and an MFR (230°C, 21.18 N) of 40 g/10 min
EPR-6: Amorphous ethylene/propylene copolymer having a propylene content of 26% by weight and an MFR (230°C, 21.18 N) of 5.4 g/10 min
EPR-7: Amorphous ethylene/propylene copolymer having a propylene content of 88% by weight and an MFR (230°C, 21.18 N) of 2.5 g/10 min
EPDM: Amorphous ethylene/propylene/ethylidene norbornene copolymer having a propylene content of 40% by weight, an ethylidene norbornene content of 5% by weight and an MFR (230°C, 21.18 N) of 40 g/10 min
EBR-1: Amorphous ethylene/1-butene copolymer having a 1-butene content of 20% by weight and an MFR (230°C, 21.18 N) of 6.7 g/10 min
EBR-2: Crystalline ethylene/1-butene copolymer having a 1-butene content of 35% by weight, a crystalline melting point of 110°C and an MFR (230°C, 21.18 N) of 6 g/10 min
PE-1: Crystalline ethylene polymer (high density polyethylene) having a density of 0.954 g/cm³ and an MFR (190°C, 21.18 N) of 7
PE-2: Crystalline ethylene/1-butene copolymer (straight-chain low density polyethylene) having a density of 0.935 g/cm³ and an MFR (190°C, 21.18 N) of 3

### EXAMPLES 1-10 AND COMPARATIVE EXAMPLES 1-2

PP-1, PP-2, PP-3, EPR-1, EPR-2, EPR-3, EPR-4, EPR-5 and EPDM in an amount set forth in Table 1, 0.10 parts by weight of tetrakis-[methylene-3-(3',5'-di-t-butyl-4'-hydroxyphenyl)propionate]methane as an oxidation inhibitor, and 0.20 parts by weight of aluminum silicate as a blocking inhibitor were homogeneously blended by a Henschel mixer (trade name). The mixture thus obtained was charged into an extruder by which it was melt-kneaded with a cylinder temperature thereof being set to 220°C. The composition was then pelletized. The composition was then evaluated for number of fish eyes occurring before retention, number of fish eyes occurring after retention and film-making properties. The results are set forth in Table 1.

In addition, the above described composition was extruded through an extruder having a bore diameter of 65 mm and a T-die at a melting temperature of 220°C, and then rapidly cooled in an air chamber and over a quenching roll having a surface temperature of 30°C to obtain a film. The film thus obtained was then immediately wound while being subjected to corona discharge treatment on one side thereof such that the wetting index thereof reached 40 dyne/cm to make a film having a thickness of 25 µm in the form of a rolled film having a width of 60 cm. The film thus obtained was then slit into a web having a width of 50 cm by means of a slitter. The web was then set in a continuous vacuum metallizing apparatus. The web was then continuously fed and wound while being metallized with aluminum on the corona-discharged surface thereof under reduced pressure of 5 x 10⁻⁵ Torr. Thus, a metallized film comprising an aluminum layer having a thickness of about 350Å (within ± 15Å) on one side thereof was obtained. The metallized film thus obtained was then evaluated for metallizing strength. The results are set forth in Table 1.

### EXAMPLES 11-13 AND COMPARATIVE EXAMPLES 4-8

PP-1, PP-4, EPR-1, EPR-6, EBR-1, EBR-2, EPR-7, PE-1 and PE-2 in an amount set forth in Table 2, 0.10 parts by weight of tetrakis-[methylene-3-(3',5'-di-t-butyl-4'-hydroxyphenyl)propionate]methane as an oxidation inhibitor, and 0.20 parts by weight of aluminum silicate as a blocking inhibitor were homogeneously blended by a Henschel mixer (trade name). The mixture thus obtained was charged into an extruder by which it was then melt-kneaded with a cylinder temperature thereof being set to 220°C. The composition was then pelletized. The composition was then evaluated for number of fish eyes occurring before retention, number of fish eyes occurring after retention and film-making properties. The results are set forth in Table 2.

In addition, the above described composition was extruded through an extruder having a bore diameter of 65 mm and a T-die at a melting temperature of 220°C, and then rapidly cooled in an air chamber and over a quenching roll having a surface temperature of 30°C to obtain a film. The film thus obtained was then immediately wound while being subjected to corona discharge treatment on one side thereof such that the wetting index thereof reached 40 dyne/cm to make a film having a thickness of 25µm in the form of a rolled film having a width of 60 cm. The film thus obtained was then slit into a web having a width of 50 cm by means of a slitter. The web was then set in a continuous vacuum metallizing apparatus. The web was then continuously fed and wound while being metallized with aluminum on the corona-discharged surface thereof under reduced pressure of 5 x 10⁻⁵ Torr. Thus, a metallized film comprising an aluminum layer having a thickness of about 350Å (within ±15Å) on one side thereof was obtained. The metallized film thus obtained was then evaluated for metallizing strength. The results are set forth in Table 2.

Tables 1 and 2 show that Examples 1 to 13 are excellent all in number of fish eyes occurring before retention, number of fish eyes occurring after retention, film-making properties and metallizing strength. On the contrary, Comparative Example 1 exhibits a poor metallizing strength. Comparative Examples 2 to 8 are not excellent in the number of fish eyes occurring before retention and number of fish eyes occurring after retention and thus are not suitable for the present invention. This shows that the films of the comparative examples are very poor in any of these properties.

Furthermore, the metallized films of Examples 1 to 13 exhibited good gloss and printing properties on the metallized surface thereof and thus presented no problems.

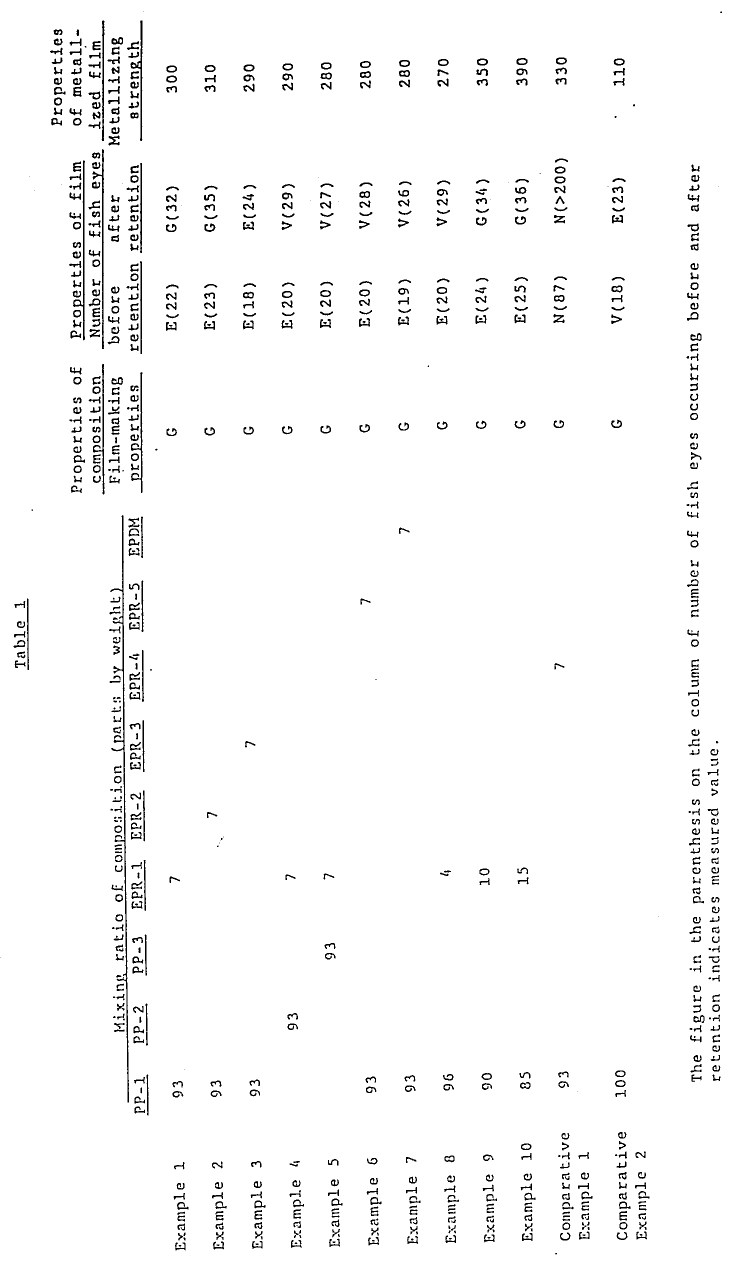

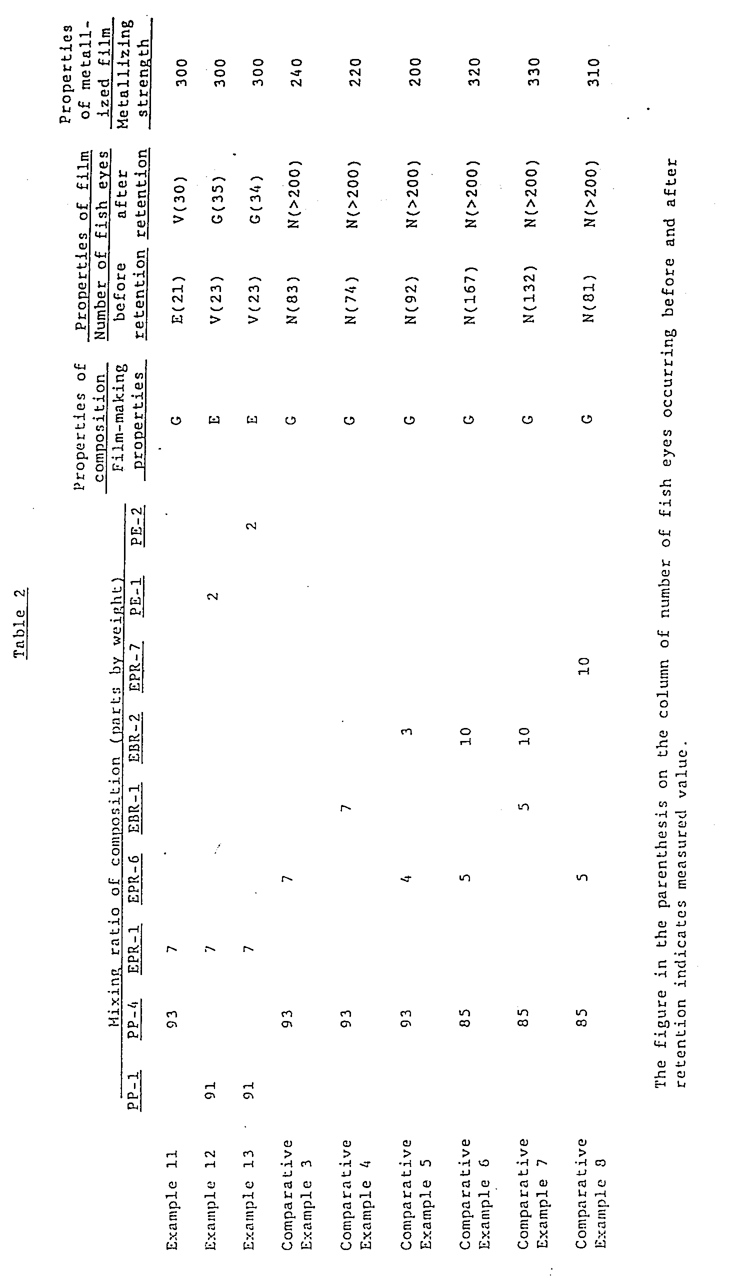

The method for measuring physical properties and criteria of the evaluation in Examples 14 to 33 (corresponding to any of embodiments (7) to (14) of the present invention) and Comparative Examples 9 to 20 are as follows:

### (5) Transparency

The haze of the unmetallized film was measured according to ASTM D1003 to give a criterion of external appearance (unit: %).

### (6) Blooming index (hereinafter occasionally abbreviated as BI)

The unmetallized film was stored in an atmosphere of 40°C for 7 days, measured for haze according to ASTM D1003, and then washed with ethanol. The film thus washed was then again measured for haze according to ASTM D1003 to determine the haze difference between before and after washing as an index of external appearance. The smaller this value is, the better is the external appearance of the film.

### (7) Glossiness

The glossiness of the metallized film on the metallized surface was measured at a sensitivity of 1/20 and an indication angle of 20 degrees according to ASTM D523 to give an indication of external appearance (metallic gloss) (unit: %).

### (8) Peel strength on metallized surface (Metallizing strength)

A film metallized with a metal (aluminum) on one side thereof and a biaxially oriented polypropylene film having an average thickness of 20 µm were laminated with an adhesive for dry laminate in such an arrangement that the metallized surface of the former film was brought into contact with the latter film. The laminated film thus obtained was then aged at a temperature of 40°C for 2 days. After the adhesive was thoroughly dried, the peel strength at an angle of 90 degrees on the interface was measured by a tensile tester to give an indication of peel strength on metallized surface. A peel strength of not less than 150 is considered good. (unit: g/15 mm)

### (9) Number of fish eyes occurring before retention

The composition was extruded through an extruder having a bore diameter of 65 mm and a T-die at a melting temperature of 250°C, and then rapidly cooled in an air chamber and over a quenching roll having a surface temperature of 30°C to obtain a film having a thickness of 30 µm. The film thus obtained was visually observed for the number of fish eyes having a size of from 0.15 to 0.49 mm and fish eyes having a size of not less than 0.5 mm in 1,000 cm² and evaluated in accordance with the following criteria as the number of fish eyes occurring before retention which is an indication of external appearance (unit: /500 cm²). The evaluation results E, V, G and N have the following meaning.
E: The number of fish eyes having a size of not less than 0.5 mm is 0/500 cm² and the number of fish eyes having a size of from 0.15 to 0.49 mm is not more than 24/500 cm²;
V: The number of fish eyes having a size of not less than 0.5 mm is 0/500 cm² and the number of fish eyes having a size of from 0.15 to 0.49 mm is from 25 to 30/500 cm²;
G: The number of fish eyes having a size of not less than 0.5 mm is 0/500 cm² and the number of fish eyes having a size of from 0.15 to 0.49 mm is from 31 to 49/500 cm²; and
N: The number of fish eyes having a size of not less than 0.5 mm is not less than 1/500 cm², or the number of fish eyes having a size of not less than 0.5 mm is 0/500 cm² and the number of fish eyes having a size of from 0.15 to 0.49 mm is not less than 50/500 cm².

In the above E to G, no problems arise in practical use.

### (10) Number of fish eyes occurring after retention

After the measurement of the number of fish eyes occurring before retention, the operation of the extruder and T-die used was suspended. When the temperature in the extruder reached not higher than 50°C, the extruder and T-die were again heated to a temperature of 250°C. After 2 hours later, the composition was processed in the same manner as above to obtain a film. The film obtained 10 minutes after the restart of film making was then visually determined for the number of fish eyes having a size of from 0.15 to 0.49 mm and fish eyes having a size of not less than 0.5 mm per 1,000 cm². The evaluation of fish eye was conducted in accordance with the following criteria as the number of fish eyes occurring after retention which is an indication of external appearance (unit: /500 cm²). The evaluation results E, V, G and N have the following meaning:
E: The number of fish eyes having a size of not less than 0.5 mm is 0/500 cm² and the number of fish eyes having a size of from 0.15 to 0.49 mm is not more than 24/500 cm²;
V: The number of fish eyes having a size of not less than 0.5 mm is 0/500 cm² and the number of fish eyes having a size of from 0.15 to 0.49 mm is from 25 to 30/500 cm²;
G: The number of fish eyes having a size of not less than 0.5 mm is 0/500 cm² and the number of fish eyes having a size of from 0.15 to 0.49 mm is from 31 to 49/500 cm²; and
N: The number of fish eyes having a size of not less than 0.5 mm is not less than 1/500 cm², or the number of fish eyes having a size of not less than 0.5 mm is 0/500 cm² and the number of fish eyes having a size of from 0.15 to 0.49 mm is not less than 50/500 cm².

In the above E to G, no problems arise in practical use.

### (11) Wet transferability

The unmetallized film was sandwiched between two sheets of a metallized film in such an arrangement that it was brought into contact with the metallized surface of the respective metallized film (wetting index: 54 dyne). The laminate was then allowed to stand under a load of 10 g/cm² in an atmosphere of 50°C for 48 hours. The metallized surface of the metallized film which had been brought into contact with the unmetallized film was then measured for wetting index. When the wetting index was not less than 37, it was considered good.

### (12) Film-making properties (1)

The compositions obtained in Examples 14 to 33 and Comparative Examples 9 to 20 described below were each continuously extruded through an extruder having a bore diameter of 65 mm and a T-die at a temperature of 220°C, and then rapidly cooled in an air chamber and over a quenching roll having a surface temperature of 30°C to obtain a film. After 1 hour later, the quenching roll was organoleptically evaluated for surface stain in accordance with the following criteria to give an indication of film-making properties. The evaluation results G and N have the following meaning:
G: Little or no stain is observed on the surface of roll.
N: Stain is apparently observed on the surface of roll.

### Film-making properties (2)

The compositions obtained in Examples 14 to 33 and Comparative Examples 9 to 20 described below were each extruded through an extruder having a bore diameter of 65 mm and a T-die at a melting temperature of 220°C, and then rapidly cooled in an air chamber and over a quenching roll having a surface temperature of 30°C to obtain a film. The film thus obtained was immediately wound continuously on a roll while being subjected to corona discharge treatment on one side thereof such that the wetting index thereof reached 40 dyn/cm. The film being wound was visually observed and evaluated in accordance with the following criteria to give an indication of film-making properties. The evaluation results E, G and N have the following meaning.
E: Neither wrinkles nor uneven windings were observed.
G: Some wrinkles observed but no practical problems arise.
N: Wrinkles and uneven windings occurred continuously, and the film was hardly put into practical use.

In the above E and G, no problems arise in practical use.

### Film-making properties (3)

The compositions obtained in Examples 14 to 33 and Comparative Examples 9 to 20 were measured for the content of active chlorine as an indication of screw deterioration.
E: The content of active chlorine is less than 10 ppm.
G: The content of active chlorine is from not less than 10 ppm to not more than 200 ppm.
N: The content of active chlorine is not less than 200 ppm.

In the above E and G, no problems arise in practical use.

The compositions, polymers and oxidation inhibitors used in the Examples 14 to 33 and Comparative Examples 9 to 20 is described below.
Oxidation inhibitor (1): Tetrakis[methylene-3-(3,5-di-t-butyl-4-hydroxyphenyl)propionate]methane
Oxidation inhibitor (2): Tris(2,4-di-t-butylphenyl) phosphite
PP (1): Crystalline ethylene/propylene/1-butene copolymer having an ethylene content of 2.5% by weight, a 1-butene content of 4.5% by weight, a crystalline melting point of 140°C and an MFR (230°C) of 6.0 g/10 min
PP (2): Crystalline ethylene/propylene copolymer having an ethylene content of 2.5% by weight, a crystalline melting point of 150°C and an MFR (230°C) of 7.0 g/10 min
PE(1): Crystalline ethylene polymer (high density polyethylene) having a density of 0.954 g/cm³ and a melt flow rate of 7 g/10 min as determined according to condition 4 set forth in Table 1 of JIS K7210 (testing temperature: 190°C, testing load: 21.18 N)
PE(2): Crystalline ethylene/1-butene copolymer (straight-chain low density polyethylene) having a density of 0.935 g/cm³ and a melt flow rate of 3 g/10 min as determined according to condition 4 set forth in Table 1 of JIS K7210 (testing temperature: 190°C, testing load: 21.18 N)
EPR(1): Amorphous ethylene/propylene copolymer having an ethylene content of 60% by weight and an MFR (230°C) of 6
   Composition (1): Amorphous ethylene/propylene copolymer composition having an ethylene content of 60% by weight, an MFR (230°C) of 6 and an oxidation inhibitor (1) content of 0.2% by weight obtained by a process which comprises adding the oxidation inhibitor (1) to a solution of ethylene and propylene at the final stage of the copolymerization thereof to obtain a powder, and then subjecting the powder to melt kneading through an extruder to effect pelletization
   Composition (2): Amorphous ethylene/propylene copolymer composition having an ethylene content of 60% by weight, an MFR (230°C) of 6 and an oxidation inhibitor (1) content of 1% by weight obtained by a process which comprises adding the oxidation inhibitor (1) to a solution of ethylene and propylene at the final stage of the copolymerization thereof to obtain a powder, and then subjecting the powder to melt kneading through an extruder to effect pelletization
   Composition (3): Amorphous ethylene/propylene copolymer composition having an ethylene content of 60% by weight, an MFR (230°C) of 6 and an oxidation inhibitor (1) content of 2% by weight obtained by a process which comprises adding the oxidation inhibitor (1) to a solution of ethylene and propylene at the final stage of the copolymerization thereof to obtain a powder, and then subjecting the powder to melt kneading through an extruder to effect pelletization
   Composition (4): Amorphous ethylene/propylene copolymer composition having an ethylene content of 60% by weight, an MFR (230°C) of 6, an oxidation inhibitor (1) content of 0.5% by weight and an oxidation inhibitor (2) content of 0.5% by weight obtained by a process which comprises adding the oxidation inhibitors (1) and (2) to a solution of ethylene and propylene at the final stage of the copolymerization thereof to obtain a powder, and then subjecting the powder to melt kneading through an extruder to effect pelletization
   Composition (5): Amorphous ethylene/propylene copolymer composition having an ethylene content of 60% by weight, an MFR (230°C) of 60 and an oxidation inhibitor (1) content of 0.5% by weight obtained by a process which comprises adding the oxidation inhibitor (1) to a solution of ethylene and propylene at the final stage of the copolymerization thereof to obtain a powder, and then subjecting the powder to melt kneading through an extruder to effect pelletization
   Composition (6): Amorphous ethylene/propylene copolymer composition having an ethylene content of 60% by weight, an MFR (230°C) of 6 and an oxidation inhibitor (1) content of 0.5% by weight obtained by a process which comprises adding the oxidation inhibitor (1) to a solution of ethylene and propylene at the final stage of the copolymerization thereof to obtain a powder, and then subjecting the powder to melt kneading through an extruder to effect pelletization
   Composition (7): Amorphous ethylene/propylene copolymer composition having an ethylene content of 60% by weight, an MFR (230°C) of 1 and an oxidation inhibitor (1) content of 0.5% by weight obtained by a process which comprises adding the oxidation inhibitor (1) to a solution of ethylene and propylene at the final stage of the copolymerization thereof to obtain a powder, and then subjecting the powder to melt kneading through an extruder to effect pelletization
   Composition (8): Amorphous ethylene/propylene copolymer composition having an ethylene content of 60% by weight, an MFR (230°C) of 6 and an oxidation inhibitor (1) content of 0.03% by weight obtained by a process which comprises adding the oxidation inhibitor (1) to a solution of ethylene and propylene at the final stage of the copolymerization thereof to obtain a powder, and then subjecting the powder to melt kneading through an extruder to effect pelletization
HT: Hydrotalcite having an average grain diameter of 2 µm represented by the chemical formula Mg_{4.5}Al₂(OH)₁₃·3.5H₂O
LiAl: Salt of a lithium-aluminum composite hydroxide having an average grain diameter of 2 µm and an oil absorption of 50 mℓ/100 g represented by the chemical formula Al₄Li₂(OH)₁₂CO₃·1.6H₂O

### EXAMPLES 14-17 AND COMPARATIVE EXAMPLES 9-15

As shown in Table 3 below, the composition (1), the composition (2), the composition (3), the composition (4), the composition (8), EPR(1), PP(1), the oxidation inhibitor (1) and the oxidation inhibitor (2) were blended by means of a tumbling mixer, and melt-kneaded through an extruder which cylinder temperature was set to 220°C to obtain a pelletized composition. The composition thus obtained was extruded through an extruder having a bore diameter of 65 mm and a T-die at a melting temperature of 220°C, and then rapidly cooled in an air chamber and over a quenching roll having a surface temperature of 30°C to obtain a film. The properties of the film and composition are set forth in Table 3.

On the other hand, another batch of the composition was processed into a film. The film thus obtained was then immediately wound while being subjected to corona discharge treatment on one side thereof such that the wetting index thereof reached 40 dyne/cm to make a film having a thickness of 25 µm in the form of a rolled film having a width of 60 cm. The film thus obtained was then slit into a web having a width of 50 cm by means of a slitter. The web was then set in a continuous vacuum metallizing apparatus. The web was then continuously fed and wound while being metallized with aluminum on the corona-discharged surface thereof under reduced pressure of 5 x 10⁻⁵ Torr. Thus, a metallized film comprising an aluminum layer having a thickness of about 350Å (within ±15Å) on one side thereof was obtained in the form of a rolled film having a length of 2,000 m. The properties of the metallized film thus obtained are set forth in Table 3.

### EXAMPLES 18-24

As shown in Table 4 below, the composition (5), the composition (6), the composition (7), EPR(1), PE(1), PE(2), PP(1) and the oxidation inhibitor (1) were blended by means of a tumbling mixer, and then melt-kneaded through an extruder to obtain a pelletized composition. The pelletized composition was then processed in the same manner as in Example 14 to obtain a film and a metallized film. The properties of the film, the compositions used and the metallized film are set forth in Table 4.

### EXAMPLES 25-31 AND COMPARATIVE EXAMPLES 16-20

As shown in Table 5 below, the composition (1), the composition (6), the composition (3), EPR(1), PP(2) and the oxidation inhibitor (1) were blended by means of a tumbling mixer, and then melt-kneaded through an extruder to obtain a pelletized composition. The pelletized composition was then processed in the same manner as in Example 14 to obtain a film and a metallized film. The properties of the film, the compositions used and the metallized film are set forth in Table 5.

### EXAMPLES 32-33

As shown in Table 6 below, the composition (1), PP(1), the oxidation inhibitor (1), HT, and/or LiAl were blended by means of a tumbling mixer, and then melt-kneaded through an extruder to obtain a pelletized composition. The pelletized composition was then processed in the same manner as in Example 14 to obtain a film and a metallized film. The properties of the film, the compositions used and the metallized film are set forth in Table 6.

As can be seen in Table 3, the same amount of an oxidation inhibitor was used in Examples 14 and 15 and Comparative Examples 9 and 10. Similarly, the same amount of an oxidation inhibitor was used in Example 16 and Comparative Examples 11 and 12. Example 17 and Comparative Example 13 employed two different oxidation inhibitors, respectively, in the same amount. Examples 14, 15, 16 and 17, which employed the amorphous ethylene/α-olefin copolymer composition (B'') of the present invention, were excellent in all of film-making properties of composition, external appearance of film, external appearance of metallized film and metallizing strength. On the contrary, Comparative Examples 9, 10, 11, 12 and 13, in which the amorphous ethylene/α-olefin copolymer composition (B'') was not used, couldn't satisfy the requirements for film-making properties of composition, external appearance of film, external appearance of metallized film, and metallizing strength at the same time. Furthermore, Comparative Examples 14 and 15, in which the amorphous ethylene/α-olefin copolymer composition (B'') was not used and a larger amount of an oxidation inhibitor than Examples 14, 15 and 16 was used, couldn't satisfy the requirements for film-making properties of composition, external appearance of film, external appearance of metallized film and metallizing strength at the same time.

As can be seen in Table 4, Examples 18, 19, 20, 21, 22, 23 and 24 were excellent in all of film-making properties of composition, external appearance of film, external appearance of metallized film and metallizing strength.

As can be seen in Table 5, the same amount of an oxidation inhibitor was used in Example 25 and Comparative Example 16. Similarly, the same amount of an oxidation inhibitor was used in Example 27 and Comparative Example 17, and Example 29 and Comparative Example 18. Examples 25, 27 and 29, which employed the amorphous ethylene/α-olefin copolymer composition (B'') of the present invention, were excellent in all of film-making properties of composition, external appearance of film, external appearance of metallized film and metallizing strength. On the contrary, Comparative Examples 16, 17 and 18, in which the amorphous ethylene/α-olefin copolymer composition (B'') was not used, couldn't satisfy the requirements for film-making properties of composition, external appearance of film, external appearance of metallized film, and metallizing strength at the same time. Furthermore, Comparative Examples 19 and 20, in which the amorphous ethylene/α-olefin copolymer composition (B'') was not used and a larger amount of an oxidation inhibitor than Example 29 was used, couldn't satisfy the requirements for film-making properties of composition, external appearance of film, external appearance of metallized film and metallizing strength at the same time. On the other hand, Examples 26, 28, 30 and 31, which employed the amorphous ethylene/α-olefin copolymer composition (B'') of the present invention, were excellent in all of film-making properties of composition, external appearance of film, external appearance of metallized film and metallizing strength.

As can be seen in Table 6, Examples 32 and 33 exhibited a decreased amount of active chlorine and hence excellent in film-making properties.

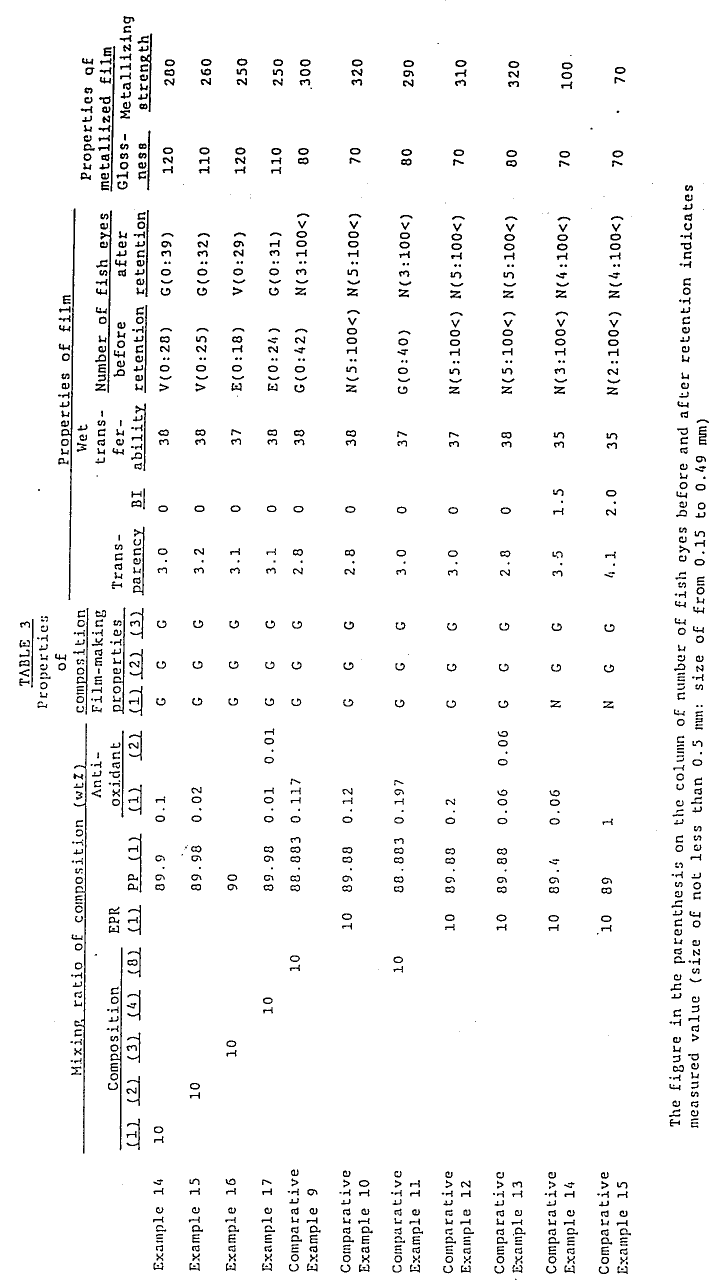

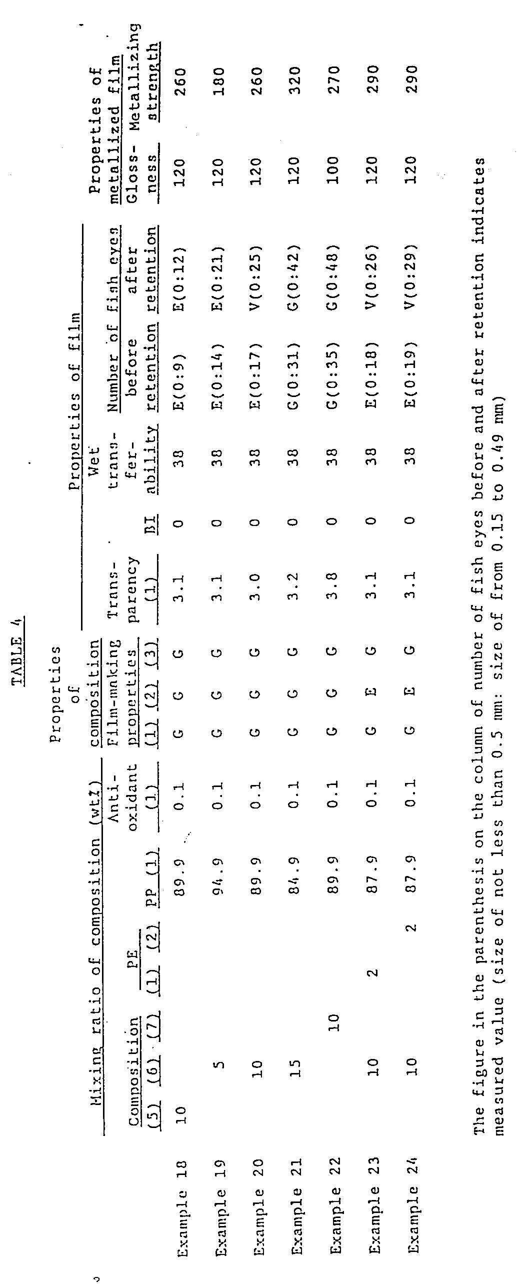

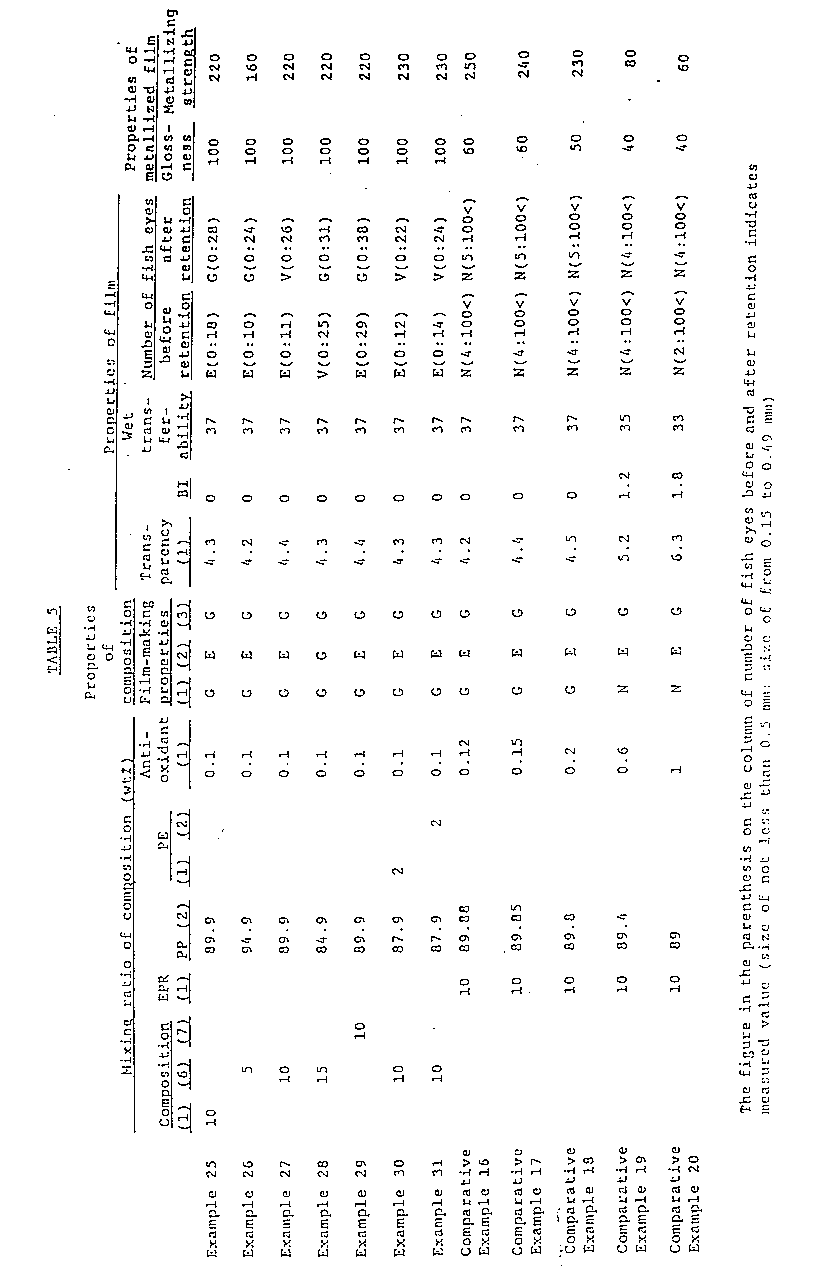

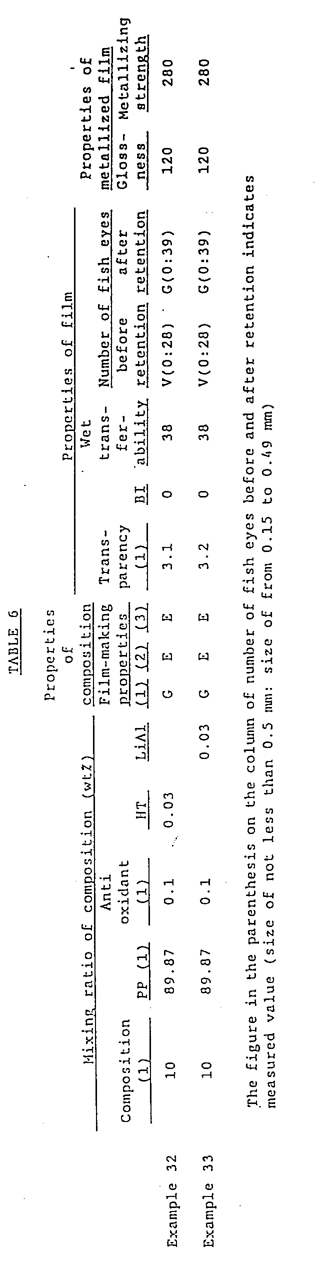

The olefin polymer film comprising the olefin polymer composition of the present invention has an excellent transparency and shows few fish eyes before and after retention, exhibiting an excellent external appearance. Furthermore, the metallized film comprising the olefin polymer film having an excellent external appearance is excellent in metallizing strength with a metal and in gloss, exhibiting excellent external appearance and gas barrier properties. Thus, the metallized film of the present invention can be used more widely and in a larger amount in packaging, decoration, etc., particularly as food packaging film.

While the invention has been described in detail and with reference to specific examples thereof, it will be apparent to one skilled in the art that various changes and modifications can be made without departing from the spirit and scope thereof.

## Claims

1. An olefin polymer film (F₁') which comprises an olefin polymer composition (C') comprising:
from 2 to 20% by weight of an amorphous ethylene/α-olefin copolymer composition (B'') comprising from 95 to 99.9% by weight of an amorphous ethylene/α-olefin copolymer (B') and from 0.1 to 5% by weight of an oxidation inhibitor; and
from 80 to 98% by weight of a crystalline propylene polymer (A').

2. An olefin polymer film (F₂') which comprises an olefin polymer composition (E') comprising:
from 2 to 20% by weight of an amorphous ethylene/α-olefin copolymer composition (B'') comprising from 95 to 99.9% by weight of an amorphous ethylene/α-olefin copolymer (B') and from 0.1 to 5% by weight of an oxidation inhibitor;
from 79.5 to 97.99% by weight of a crystalline propylene (A'); and
from 0.01 to 0.5% by weight of a hydrotalcite or a salt of a lithium-aluminum composite hydroxide (D').

3. A metallized film (G₁') prepared by metallizing an olefin polymer film (F₁') which comprises an olefin polymer composition (C') comprising:
from 2 to 20% by weight of an amorphous ethylene/α-olefin copolymer composition (B'') comprising from 95 to 99.9% by weight of an amorphous ethylene/α-olefin copolymer (B') and from 0.1 to 5% by weight of an oxidation inhibitor; and
from 80 to 98% by weight of a crystalline propylene polymer (A').

4. A metallized film (G₂') prepared by metallizing an olefin polymer film (F₂') which comprises an olefin polymer composition (E') comprising:
from 2 to 20% by weight of an amorphous ethylene/α-olefin copolymer composition (B'') comprising from 95 to 99.9% by weight of an amorphous ethylene/α-olefin copolymer (B') and from 0.1 to 5% by weight of an oxidation inhibitor;
from 79.5 to 97.99% by weight of a crystalline propylene (A'); and
from 0.01 to 0.5% by weight of a hydrotalcite or a salt of a lithium-aluminum composite hydroxide (D').

5. A process for preparing an olefin polymer composition (C') which comprises:
mixing from 95 to 99.9% by weight of an amorphous ethylene/α-olefin (B') and from 0.1 to 5% by weight of an oxidation inhibitor to prepare an amorphous ethylene/α-olefin copolymer composition (B''); and
mixing from 2 to 20% by weight of said amorphous ethylene/α-olefin copolymer composition (B'') and from 80 to 98% by weight of a crystalline propylene polymer (A').

6. A process for preparing an olefin polymer composition (E') which comprises:
mixing from 95 to 99.9% by weight of an amorphous ethylene/α-olefin (B') and from 0.1 to 5% by weight of an oxidation inhibitor to prepare an amorphous ethylene/α-olefin copolymer composition (B''); and
mixing from 2 to 20% by weight of said amorphous ethylene/α-olefin copolymer composition (B''), from 79.5 to 97.99% by weight of a crystalline propylene polymer (A') and from 0.01 to 0.5% by weight of a hydrotalcite or a salt of a lithium-aluminum composite hydroxide (D').
